Europäisches Patentamt

European Patent Office

Office européen des brevets

(11) Veröffentlichungsnummer: **0 151 951**
A2

(12) **EUROPÄISCHE PATENTANMELDUNG**

(21) Anmeldenummer: 85100432.5

(22) Anmeldetag: 17.01.85

(51) Int. Cl.⁴: **G 01 B 5/14**

(30) Priorität: 27.01.84 DE 3402812
27.07.84 DE 3427701

(43) Veröffentlichungstag der Anmeldung:
21.08.85 Patentblatt 85/34

(84) Benannte Vertragsstaaten:
AT BE CH DE FR GB IT LI LU NL SE

(71) Anmelder: Maschinenbau Haldenwang GmbH & Co. KG
Hojen
D-8961 Haldenwang(DE)

(72) Erfinder: Rauch, Winfried

D-8961 Haldenwang 76 1/3(DE)

(72) Erfinder: Gaiser, German
Pfaffenhofen 16
D-8961 Haldenwang(DE)

(74) Vertreter: Pfister, Helmut, Dipl.-Ing.
Buxacher Strasse 9
D-8940 Memmingen/Bayern(DE)

(54) Vorrichtung zur Ermittlung des Spiels an Kraftfahrzeugrädern.

(57) Die Vorrichtung ist derart ausgebildet, daß die eine Aufstandsplatte 2 zwei Arbeitszylinder 9 und 1o besitzt, so daß Bewegungen in der Achsrichtung und in der Fahrzeuglängsrichtung möglich sind, während die andere Aufstandsplatte 1 nur einen Arbeitszylinder 8 für die Bewegung in Fahrzeuglängsrichtung besitzt. Die Anordnung ist dabei derart getroffen, daß in der Regel immer nur eine der Aufstandsplatten eine Bewegung in einer Richtung ausführt. Die Bauweise wird hierdurch sehr einfach und auch bezüglich der Wirkungsweise besser übersehbar.

./...

Croydon Printing Company Ltd

Fig. 1

Patentanwalt

# Dipl.-Ing. HELMUT PFISTER

European Patent Attorney

Postscheckkonto München Nr. 134339-805
Bayerische Vereinsbank Memmingen Nr. 2303396

Buxacher Straße 9
D-8940 MEMMINGEN/BAYERN
Telefon (08331)-65183
Telex 54931 patpfm d

0151951

21/3

16. JAN 1985

Firma Maschinenbau Haldenwang GmbH & Co. KG,
Hojen, D-8961 Haldenwang

---

Vorrichtung zur Ermittlung des Spiels
an Kraftfahrzeugrädern

---

Die Erfindung betrifft eine Vorrichtung zur Ermittlung des Spiels an Fahrzeugrädern, Achsaufhängungen oder dergl., insbesondere an Kraftfahrzeugen, mit Aufstandsplatten für die beiden Fahrzeugräder einer Achse, wobei die Aufstandsplatten in Achsrichtung bzw. Fahrzeuglängsrichtung mittels von einem Druckmittel beaufschlagten Arbeitszylinder bewegbar sind, denen das Druckmittel über Steuerventile zuströmt.

– 2 –

In der DE-PS 22 11 540 ist eine derartige Vorrichtung beschrieben, bei der das zu prüfende Fahrzeug mit den Rädern einer Achse auf ein Paar von Aufstandsplatten auffährt, die beide sowohl in Achsrichtung als auch in Fahrzeuglängsrichtung bewegbar sind. Die Arbeitszylinder, die die Aufstandsplatten antreiben, sind bezüglich ihrer Steuerventile derart geschaltet und miteinander gekoppelt, daß auf die beiden Räder wahlweise gegensinnige Querkräfte oder gegensinnige Längskräfte ausübbar sind.

Mittels dieser bekannten Vorrichtung ist eine Ermittlung des Spiels der Räder bzw. Achsaufhängungen zwar möglich, jedoch beeinträchtigt die gleichzeitige Bewegung der Räder einer Achse in entgegengesetzten Richtungen das leichte Erkennen der jeweiligen Defekte. Insbesondere in denjenigen Fällen, in denen zwischen der Achse und dem Fahrgestell ein Defekt, übermäßiges Spiel oder dergl. vorhanden ist, kann es nicht ausgeschlossen werden, daß bei der gegensinnigen Bewegung der beiden Aufstandsplatten in Achsrichtung eine Bewegung der Achse gegenüber dem Fahrgestell nicht auftritt und insofern Defekte nicht erkannt werden.

Hinzu kommt, daß bei dieser bekannten Einrichtung die erforderlichen Steuerungen für den gleichzeitigen und gegensinnigen Antrieb der Aufstandsplatten vergleichsweise aufwendig sind.

Es ist Aufgabe der Erfindung, die Vorrichtungen der bekannten Art derart abzuändern und zu verbessern, daß mit möglichst geringem baulichen Aufwand eine einfach bedienbare und klar übersehbare Prüfungsmöglichkeit gegeben ist, mit der es schnell und sicher möglich ist, tatsächlich alle wesentlichen Defekte an Fahrzeugrädern, Achsaufhängungen oder dergl. zu ermitteln.

Zur Lösung dieser Aufgabe geht die Erfindung aus von einer Vorrichtung der eingangs beschriebenen Art und schlägt vor, daß die eine Aufstandsplatte mittels der eingebauten Arbeitszylinder in Achs- und Fahrzeuglängsrichtung bewegbar, die andere Aufstandsplatte mittels des eingebauten Arbeitszylinders dagegen nur in Fahrzeuglängsrichtung bewegbar ist und daß die Steuerventile derart geschaltet sind, daß jeweils nur eine der Aufstandsplatten eine Bewegung in einer Richtung ausführt.

Die Erfindung ergibt eine überraschend einfache Lösungsmöglichkeit des Problems, wobei insbesondere der bauliche Aufwand wesentlich reduziert ist.

Zunächst spart die Erfindung bei der einen Aufstandsplatte den Aufwand für einen Antrieb in der Achsrichtung ein. Es wurde gefunden, daß es möglich ist, eine Prüfung auf alle Defekte auch dann durchzuführen, wenn nur die eine Platte eine Bewegungsmöglichkeit in zwei zueinander senkrechten Richtungen besitzt, während es für die andere Platte in fast allen Fällen genügt, wenn diese nur in der Fahrzeuglängsrichtung beweglich ist. Es ist nämlich auch möglich, dasjenige Rad beziehungsweise diejenige Radaufhängung, das auf dieser nur beschränkt beweglichen Platte steht, voll zu prüfen, und zwar dadurch, daß die andere Aufstandsplatte eine Bewegung in Achsrichtung ausführt. Diese Bewegung überträgt sich ohne weiteres auf das andere Rad und läßt hier eine vollgültige Prüfung zu.

Da bei der Erfindung weiter die Steuerventile und die zugehörigen Einrichtungen in der Art ausgebildet sind, daß immer nur eine Bewegung in einer Richtung an einer Aufstandsplatte möglich ist, wird der Schaltungsaufwand stark reduziert.

Die Erfindung gibt aber nicht nur Vorteile im Zusammenhang mit der Herstellung einer derartigen Vorrichtung. Auch beim praktischen Betrieb ergeben sich erhebliche Einsparungen. Es ist beispielsweise möglich, für jede Bewegungsrichtung einen Schalter vorzusehen oder einen Schalter, der die Vor- und Rückwärtsbewegung in der betreffenden Richtung auslöst.

Die Schaltanordnung, die für die Vorrichtung zu bedienen ist, muß dann nur systematisch durchgeschaltet werden, wodurch ausgeschlossen wird, daß eine Prüfmöglichkeit übersehen wird.

Mittels der Erfindung ist es insbesondere auch möglich, versteckte Defekte zu finden, weil ausgeschlossen ist, daß sich gegensinnig eingeleitete Bewegungen gegenseitig aufheben.

Manche Kraftfahrzeuge, insbesondere Lastkraftfahrzeuge, besitzen zwei oder mehr untereinander durch einen Zwischenrahmen verbundene Achsen, wobei sich auf dem Zwischenrahmen dann der eigentliche Fahrzeugrahmen abstützt. Soll ein derartiges Fahrzeug geprüft werden, ergibt sich, daß es mit der vorstehend beschriebenen Vorrichtung zwar möglich ist, ein etwaiges Spiel der Radaufhängung und auch der Achsaufhängung am Zwischenrahmen zu ermitteln, daß jedoch keine Möglichkeit besteht, auch ein etwaiges Spiel oder Defekte an der Verbindung zwischen dem Zwischenrahmen einerseits und dem Fahrzeugrahmen andererseits festzustellen.

Auch die anderen bekannten Vorrichtungen einschlägiger Art, erlauben keine zuverlässige Prüfung der Aufhängung des vorerwähnten Zwischenrahmens am Fahrzeugrahmen. So schlägt die eingangs erwähnte DE-PS 22 11 540 nur vor, daß die Bewegungen der beiden Aufstandsplatten immer gegensinnig sein sollten. Gegensinnige Bewegungen in der Achsrichtung heben sich schon in der einen Achse auf und gegensinnige Bewegungen in der Längsrichtung ergeben ebenfalls bei gebremsten Rädern keine Bewegung des erwähnten Zwischenrahmens, der mit der anderen Achse auf dem Erdboden aufsteht.

Die Erfindung schlägt nun weiter vor, daß bei Ermittlung eines Spiels an der Achsaufhängung mindestens zweier verbundener Achsen, die eine der Aufstandsplatten vom zugehörigen Arbeitszylinder in Achsrichtung bewegt ist, während die andere der Aufstandsplatten verschiebbar gelagert ist, um der Schiebebewegung der Achse nachzugeben.

Diese erfindungsgemäße Variante kann in einfacher Weise dadurch verwirklicht werden, daß zusätzlich zur Bauweise, die oben angegeben ist, lediglich auch die andere Aufstandsplatte in Achsrichtung verschiebbar gelagert wird. Auf diese Weise lassen sich in eine Achse Bewegungen beziehungsweise Kräfte einleiten, die in Achsrichtung gleichgerichtet sind. Die Einleitung solcher Kräfte wäre beispielsweise bei einem zweiachsigen Fahrzeug ohne Sinn, da die betreffende Achse den Fahrzeugrahmen einfach sinngemäß mitnehmen würde, ohne daß ein verdeckter Defekt sichtbar würde. Bei zwei verbundenen Achsen führt eine solche Bewegung aber dazu, daß der Zwischenrahmen eine Drehbewegung um eine senkrechte Achse ausführt, was wiederum zu einer Dreh- oder Schwenkbewegung des Zwischenrahmens gegenüber dem Fahrzeugrahmen führt. Auf diese Weise lassen sich an der Aufhängung des Zwischenrahmens Defekte ermitteln, die sonst nicht sichtbar gemacht werden können.

In weiterer Ausgestaltung schlägt die Erfindung vor, daß beide Aufstandsplatten durch je einen Arbeitszylinder gleichsinnig in Achsrichtung angetrieben sind. Diese Bauweise bedeutet zwar einen erhöhten Aufwand, erlaubt jedoch die Einleitung beträchtlich größerer Kräfte in eine Achse, was in Sonderfällen von Vorteil sein kann. Dabei können nicht nur die beiden Arbeitszylinder, die in Fahrzeuglängsrichtung wirksam sind, gleichsinnig und gleichzeitig beaufschlagt werden, sondern auch die beiden Arbeitszylinder für die Bewegung der Aufstandsplatten in der Achsrichtung.

In der Zeichnung sind einige Ausführungsbeispiele der Erfindung schematisch dargestellt. Es zeigen:

Fig. 1                    eine Draufsicht auf die erfindungs-
                          gemäße Vorrichtung,

- 7 -

Fig. 2                eine Draufsicht auf ein abgewandeltes Ausführungsbeispiel der
                      erfindungsgemäßen Vorrichtung,

Fig. 3                einen Längsschnitt entsprechend
                      der Schnittlinie III – III der
                      Vorrichtung gemäß Fig. 1 in
                      einem anderen Maßstab,

Fig. 4                eine Variante zur Darstellung

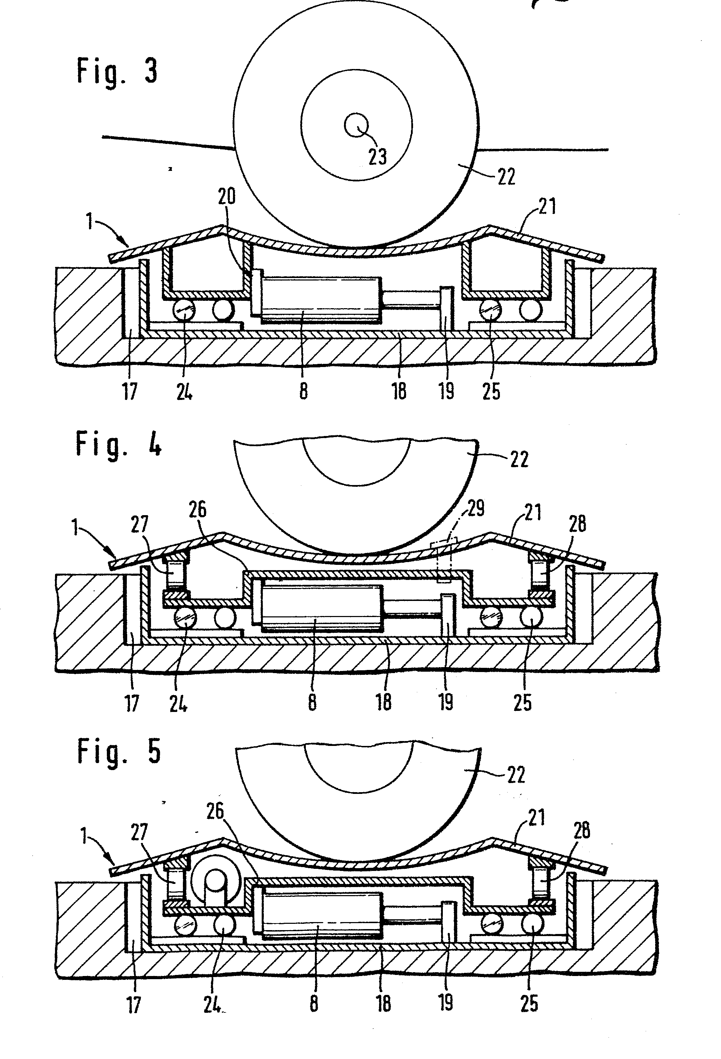

                      der Fig. 3 und

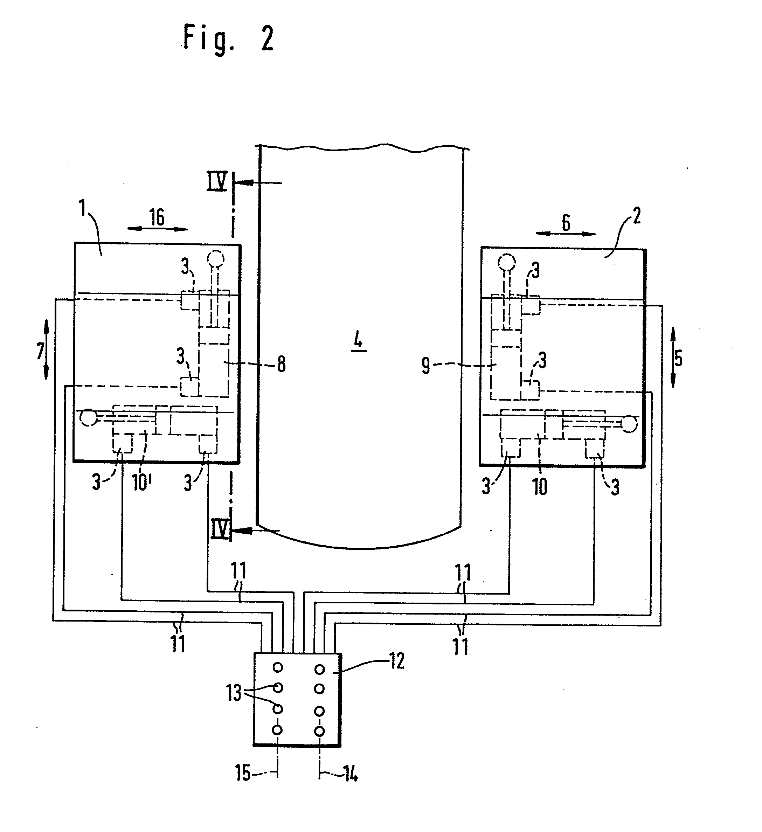

Fig. 5                einen Längsschnitt entsprechend
                      der Schnittlinie V – V der Vorrichtung nach der Fig. 2 in einem
                      anderen Maßstab.

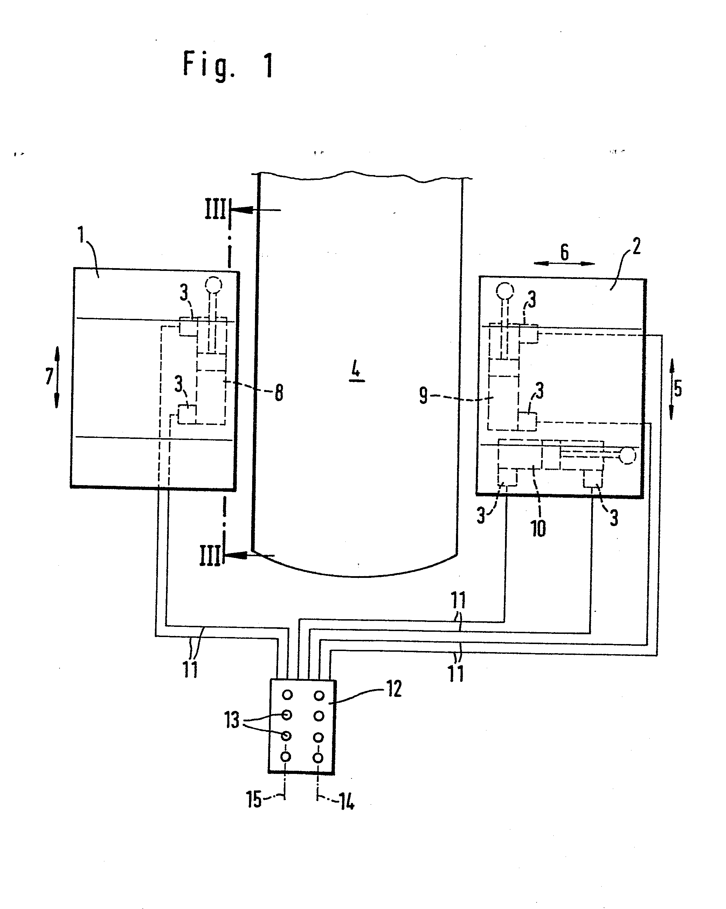

Beim Ausführungsbeispiel nach der Fig. 1 sind die Aufstandsplatten 1 und 2 zu beiden Seiten einer Grube 4 angeordnet. Der Abstand der beiden Platten 1 und 2 entspricht ungefähr der Spur, so daß ein Fahrzeug mit den beiden Rädern einer Achse auf die Platten 1 und 2 auffahren kann.

Die Grube 4 ist für die Erfindung von nebensächlicher Bedeutung. Die Erfindung kann auch ohne Grube angewandt werden.

Im gezeigten Ausführungsbeispiel ist die rechte Aufstandsplatte 2 sowohl in Fahrzeuglängsrichtung, die mit dem Pfeil 5 angedeutet ist, beweglich, als auch senkrecht hierzu in Richtung des Pfeiles 6, also in Achsrichtung. Die linke Aufstandsplatte 1 ist dagegen, wie der Pfeil 7 andeutet, nur in Fahrzeuglängsrichtung beweglich. Für die Bewegung der Aufstandsplatten 1 und 2 sind, wie an sich bekannt, hydraulische Arbeitszylinder vorgesehen, die jeweils mit strichpunktierten Linien angedeutet sind. In der linken Aufstandsplatte 1 ist dabei ein einziger hydraulischer Arbeitszylinder 8 vorgesehen, während in der rechten Aufstandsplatte zwei hydraulische Arbeitszylinder 9 und 10 vorgesehen sind, die jeweils rechtwinklig zueinander ausgerichtet sind.

Es ist klar, daß die Aufstandsplatten 1 und 2 auch gegeneinander vertauscht werden können. Die Abstützung der Aufstandsplatten gegenüber dem Untergrund erfolgt in an sich bekannter Weise, beispielsweise durch Rollen, oder ähnliche Mittel. Bei der Aufstandsplatte 2, die in zwei zueinander senkrechten Richtungen 5 und 6 beweglich ist, kann eine Zwischenplatte vorgesehen sein, die nur in einer Richtung beweglich ist und auf der dann der andere Arbeitszylinder für die Bewegung in der anderen Bewegungsrichtung montiert ist.

Die Fig. 3 zeigt einige Einzelheiten der Ausbildung der Aufstandsplatte 1. Diese Aufstandsplatte ist in einer Grube 17 angeordnet. Die Aufstandsplatte kann jedoch auch ohne eine solche Grube verwendet werden, wenn die Aufstandsplatte geeignete Auffahrtsteile besitzt.

Die Aufstandsplatte 1 besteht im wesentlichen aus dem Grundgestell 18, einem Widerlager 19 für den Arbeitszylinder 8, der sich an einem Bauteil 20 an der Abdeckung 21 abstützt. Auf der Abdeckung 21 steht das Rad 22 des zu prüfenden Fahrzeugs auf. Wenn das Rad 22 gebremst ist, läßt sich über die Beaufschlagung des Arbeitszylinders 8 eine Bewegung in die Achse 23 des Rades 22 einleiten. Die Abdeckung 21 stützt sich über die Rollen 24 und 25 auf dem Grundgestell 18 ab.

Es ist klar, daß die Aufstandsplatte 1 des Ausführungsbeispieles nach der Fig. 3 keine Bewegung in der Richtung der Achse 23 zuläßt.

Bei der Variante nach der Fig. 4 befindet sich zwischen der Abdeckung 21 und dem Grundgestell 18 eine Zwischenplatte 26, so daß zusätzlich zu den Bewegungsmöglichkeiten, die auch das Ausführungsbeispiel der Fig. 3 erlaubt, die Abdeckung 21 sich auch mittels der Rollen 27 und 28 in Richtung der Achse 23 gegenüber dem Grundgestell bewegen kann. Für diese Bewegung besitzt jedoch die Aufstandsplatte 1 gemäß Fig. 4 keinen Antrieb.

In den Druckmittelzuleitungen, zu den hydraulischen Arbeitszylindern 8, 9 und 10, die nicht näher dargestellt sind, sind beispielsweise elektromagnetisch betätigte Steuerventile 3 angeordnet und die Steuerleitungen 11 sind zu einem Steuergerät 12 zusammengeführt, das beispielsweise eine Mehrzahl von Drucktasten 13 aufweist, die beispielsweise derart geschaltet sind, daß jeweils nur die Steuerventile eines der Arbeitszylinder beeinflußbar sind, und zwar in dem Sinne, daß nur immer eine Bewegung in einer Richtung möglich ist. Dabei können die Drucktasten 13 der einen Reihe 14 der Aufstandsplatte 2 und die Drucktasten der Reihe 15 der Aufstandsplatte 1 zugeordnet sein. Die Schaltung läßt sich ohne weiteres auch derart verwirklichen, daß bei den Drucktasten der Reihe 15 sinngemäß die Steuerventile des Arbeitszylinders 10 betätigt werden, wenn beispielsweise auf das Rad auf der Aufstandsplatte 1 eine Bewegung in Achsrichtung ausgeübt werden soll.

In besonderen Fällen ist es möglich, die Anordnung auch derart zu treffen, daß beispielsweise die beiden Arbeitszylinder 8 und 9 gleichsinnig und gleichseitig beaufschlagt werden. Diese Bauweise hat große Vorteile dann, wenn eine Achsaufhängung überprüft werden soll. Bei der gleichsinnigen Bewegung lassen sich vergleichsweise große Kräfte einleiten, so daß auch versteckte Defekte sichtbar werden.

Bei der Beaufschlagung der Arbeitszylinder 8 oder 9 sind, wie an sich bekannt, die Räder durch die Bremsen zu blockieren.

In dem Ausführungsbeispiel, das in den Fig. 2 und 5 gezeigt ist, besitzt die Aufstandsplatte 2 zusätzlich noch einen in Achsrichtung wirksamen Arbeitszylinder 10'. Insbesondere ist nicht nur die Aufstandsplatte 2 in Längsrichtung gemäß dem Pfeil 5 und in Achsrichtung gemäß dem Pfeil 6 beweglich, sondern auch die Aufstandsplatte 1 kann sich in Fahrzeuglängsrichtung 7 und vor allem auch in Achsrichtung 16 verschieben.

Die Aufstandsplatte 2 besitzt eine Ausbildung, die im wesentlichen derjenigen der Fig. 5 entspricht.

Alle Arbeitszylinder 8, 9, 10 und 10', sind über die Steuerventile 3 und die Steuerleitungen 11 mit dem Steuergerät 12 verbunden,

- 11 -

das in gleicher Weise wie beim Hauptpatent Drucktasten 13 in den beiden Reihen 14 und 15 aufweist.

Bei einer Ausführungsform gemäß Fig. 2 und 5 ist es leicht möglich, eine Unbeweglichkeit der Abdeckung 21 gegenüber der Zwischenplatte 26 herbeizuführen, wenn dies gewünscht wird, um diese Aufstandsplatte so zu betreiben, wie diejenige nach den Fig. 1 und 3. Das hydraulische Druckmedium für den Arbeitszylinder 10' wird eine solche Verbindung herbeiführen.

Bei einer Ausbildungsform gemäß Fig. 4 kann es sich empfehlen, zwischen der Abdeckung 21 und der Zwischen-platte 26 ein oder mehrere wahlweise verwendbare und die Abdeckung 21 starr mit der Zwischenplatte 26 verbindende Sperrglieder 29 vorzusehen, wie diese mit strichpunktierten Linien angedeutet sind, um die Aufstandsplatte gemäß Fig. 4 so betreiben zu können wie eine Auf-standsplatte gemäß Fig. 3.

Patentanwalt

Dipl.-Ing. **HELMUT PFISTER**

European Patent Attorney

Postscheckkonto München Nr. 134339-805
Bayerische Vereinsbank Memmingen Nr. 2303396

Buxacher Straße 9
D-8940 MEMMINGEN/BAYERN
Telefon (08331)-65183
Telex 54931 polpfm d

0151951

21/3

16. JAN 1985

**Patentansprüche:**

1. Vorrichtung zur Ermittlung des Spiels an Fahrzeugrädern, Achsaufhängungen oder dergl., insbesondere an Kraftfahrzeugen, mit Aufstandsplatten für die beiden Fahrzeugräder einer Achse, wobei die Aufstandsplatten in Achsrichtung bzw. Fahrzeuglängsrichtung mittels von einem Druckmittel beaufschlagten Arbeitszylinder bewegbar sind, denen das Druckmittel über Steuerventile zuströmt, dadurch gekennzeichnet, daß die eine Aufstandsplatte (2) mittels der eingebauten Arbeitszylinder (10,9) in Achs- und Fahrzeuglängsrichtung bewegbar, die andere Aufstandsplatte (1) mittels des eingebauten Arbeitszylinders (8) dagegen nur in Fahrzeuglängsrichtung bewegbar ist, und daß die Steuerventile (3) derart geschaltet sind, daß jeweils nur eine der Aufstandsplatten (1,2) eine Bewegung in einer Richtung ausführt.

– 2 –

2. Vorrichtung nach Anspruch 1, dadurch gekennzeichnet, daß bei Ermittlung eines Spiels an der Achsaufhängung mindestens zweier verbundener Achsen die eine der Aufstandsplatten (2) vom zugehörigen Arbeitszylinder (10) in Achsrichtung bewegt ist, während die andere der Aufstandsplatten (1) verschiebbar gelagert ist, um der Schiebebewegung der Achse nachzugehen.

3. Vorrichtung nach Anspruch 2, dadurch gekennzeichnet, daß beide Aufstandsplatten (1, 2) durch je einen Arbeitszylinder (10, 10') gleichsinnig in Achsrichtung angetrieben sind.

Der Patentanwalt

Fig. 1

Fig. 2

Fig. 3

23
22
20
1
21
17    24    8    18    19    25

Fig. 4

22
27    26    29    21    28
1
17    24    8    18    19    25

Fig. 5

22
26
27    21    28
1
17    24    8    18    19    25